# EUROPÄISCHE PATENTANMELDUNG

(11) **EP 1 110 965 A2**
(43) Veröffentlichungstag der Anmeldung: **27.06.2001**
(21) Anmeldenummer: 00127210.3
(22) Anmeldetag: 14.12.2000
(51) Int. Cl.: C07F 7/08

(54) **Verfahren zur Herstellung von 1.3-Dihalogen-1.1.3.3-tetra(organyl)disiloxanen**

(30) Priorität: 23.12.1999 DE 19962567
(71) Anmelder: Wacker-Chemie GmbH, 81737 München (DE)
(72) Erfinder: Abele, Bors Cajus, Dr., 84489 Burghausen (DE); Winterfeld, Jörn, Dr., 84489 Burghausen (DE)
(74) Vertreter: Budczinski, Angelika

(57) **Zusammenfassung**

Verfahren zur Herstellung von 1.3-Dihalogen-1.1.3.3-tetra-(organyl)disiloxanen mit mindestens zwei sterisch anspruchsvollen, über ein sekundäres bzw. tertiäres Kohlenstoffatom gebundenen Organylresten durch Umsetzung von Silanen der allgemeinen Formel

RR¹SiX₂ (II)

mit Verbindungen der Formel

HOR² (III),

wobei
R, R¹, X und R² die in Anspruch 1 angegebenen Bedeutungen haben.

## Beschreibung

Die Erfindung betrifft ein Verfahren zur Herstellung von 1.3-Dihalogen-1.1.3.3-tetraorganyldisiloxanen mit mindestens zwei sterisch anspruchsvollen, über ein sekundäres bzw. tertiäres Kohlenstoffatom gebundenen Organylresten.

Das wohl am besten untersuchte und am meisten verwendete Disiloxan dieser Stoffklasse ist das bereits literaturbekannte 1.3-Dichlor-1.1.3.3-tetra-iso-propyldisiloxan. Hierzu sei beispielsweise auf US-A 3,397,221 verwiesen.

Verwendung findet 1.3-Dichlor-1.1.3.3-tetra-iso-propyldisiloxan (gleichzeitiger Schutz von Hydroxyl-Gruppen von Nucleosiden) bei der Synthese von Desoxynucleosid-Analogen; darüberhinaus ist die Verwendung beschrieben in Patentschriften der Nucleosid- bzw. Nucleotid-Chemie, wie etwa in EP 547 008 A1.

Verfahren zur Herstellung von 1.3-Dichlordisiloxanen sind bereits bekannt. So beschreiben Robins et al. in J. Amer. Chem. Soc. 1983, 105 [12], 4059-4065 die Umsetzung von 1.1.3.3-Tetra-iso-propyldisiloxan mit Chlorgas, um das gewünschte 1.3-Dichlor-1.1.3.3-tetra-iso-propyldisiloxan zu erhalten.
Die bisher beschriebenen Verfahren zur Herstellung von 1.3-Dichlor-1.1.3.3-tetra-iso-propyldisiloxan zeichnen sich jedoch meist durch komplizierte Synthesewege (z.B. Chlorierungsschritte von Disiloxanen), Kostenintensität (z.B. bei mehrstufige Verfahren) und geringe Umweltverträglichkeit (z.B. Verwendung von Tetrachlorkohlenstoff) aus. Sicherheits-, Umwelt- und Entsorgungsprobleme dominieren.

Aufgabe der Erfindung ist es, ein wirtschaftliches Verfahren zur Herstellung von 1.3-Dihalogen-1.1.3.3-tetra(organyl)disiloxanen zur Verfügung zu stellen.

Gegenstand der Erfindung ist ein Verfahren zur Herstellung von Disiloxanen der allgemeinen Formel

XRR¹Si-O-SiR¹RX (I),

dadurch gekennzeichnet, daß Silane der allgemeinen Formel

RR¹SiX₂ (II)

mit Verbindungen der Formel

HOR² (III)

umgesetzt werden,
wobei
R gleich oder verschieden sein kann und einen einwertigen, gegebenenfalls substituierten Kohlenwasserstoffrest mit 3 bis 30 Kohlenstoffatomen bedeutet, der über ein sekundäres bzw. tertiäres Kohlenstoffatom an das entsprechende Siliciumatom gebunden ist,
R¹ gleich oder verschieden sein kann und einen einwertigen, gegebenenfalls substituierten Kohlenwasserstoffrest mit 1 bis 30 Kohlenstoffatomen bedeutet,
X gleich oder verschieden sein kann und Halogenatom bedeutet und
R² ein Wasserstoffatom oder einen einwertigen, gegebenenfalls substituierten Kohlenwasserstoffrest mit 1 bis 18 Kohlenstoffatomen bedeutet.

Es gilt in allen Formeln die Vierwertigkeit des Siliciumatoms.

Bevorzugt handelt es sich bei X um das Chlor-, Brom- oder Jodatom, wobei das Chloratom besonders bevorzugt ist.

Beispiele für Reste R sind Alkylreste wie der iso-Propyl-, sek.-Butyl-, tert.-Butyl-, sek.-Pentyl-, neo-Pentyl-, tert.-Pentyl- und der 1.1-Dimethylpropylrest; Hexylreste, wie sek.-Hexylreste oder tert.-Hexylreste; Heptylreste, wie der sek.-Heptyl-, tert.-Heptyl-, 1.1-Diethylpropyl- oder der Thexylrest; Octylreste, wie iso-Octylreste und tert.-Octylreste; Nonylreste, wie iso-Nonylreste oder tert.-Nonylreste; Decylreste, wie sek.-Decylreste oder tert.-Decylreste; Octadecylreste, wie sek.-Octadecylreste oder tert.-Octadecylreste; Cyloalkylreste, wie Cyclopentylreste oder Cyclohexylreste und Methylcyclohexylreste; Alkenylreste, wie der 3-But-(1)-inrest; Alkinylreste, wie der 3-But-(1)-inrest; Aralkylreste, wie der 1-Phenylethylrest, Phenylnonylreste und der 1.1-Dimethyl-2-phenylethylrest.

Beispiele für substituierte Kohlenwasserstoffreste R sind Halogenalkylreste wie der 1.1.1.3.3.3-Hexafluor-iso-propylrest und der Heptafluor-iso-propylrest.

Bevorzugt handelt es sich bei dem Rest R um gegebenenfalls mit Halogen-, Amin- oder Mercaptogruppen substituierte Kohlenwasserstoffreste mit 3 bis 30 Kohlenstoffatomen, besonders bevorzugt um Kohlenwasserstoffreste mit 3 bis 18 Kohlenstoffatomen, insbesondere um iso-Propyl-, tert.-Butyl-, 1.1-Dimethylpropyl-, 1.1-Diethylpropyl-, 1.1-Dimethyl-2-phenylethyl-, Cyclopentyl-, Cyclohexyl- und den Thexylrest.

R¹ kann über ein primäres, sekundäres oder tertiäres Kohlenstoffatom an das entsprechende Siliciumatom gebunden sein und gleich oder verschieden zu R sein.

Beispiele für R¹ sind der Methyl-, Ethyl-, n-Propyl-, n-Butyl- und die für Rest R angegebenen Beispiele.

Bevorzugt handelt es sich bei Rest R¹ um gegebenenfalls mit Halogen-, Amin- oder Mercaptogruppen substituierte Kohlenwasserstoffreste mit 1 bis 30 Kohlenstoffatomen, besonders bevorzugt um Kohlenwasserstoffreste mit 1 bis 18 Kohlenstoffatomen, insbesondere um den Methyl-, Ethyl-, n-Propyl- und n-Butylrest.

Beispiele für Rest R² sind das Wasserstoffatom, die Methylgruppe, die Ethylgruppe sowie die für Rest R gleiche A1kylgruppe mit 1 bis 18 Kohlenstoffatomen angegebenen Beispiele.

Bevorzugt handelt es sich bei R² um das Wasserstoffatom und Alkylgruppen mit 1 bis 18 Kohlenstoffatomen, besonders bevorzugt um das Wasserstoffatom, den Methyl- und den Ethylrest, insbesondere um das Wasserstoffatom.

Besonders bevorzugte Disiloxane der allgemeinen Formel (I) sind
1.3-Dichlor-1.1.3.3-tetra-iso-propyldisiloxan,
1.3-Dichlor-1.1.3.3-tetra-iso-butyldisiloxan,
1.3-Dichlor-1.1.3.3-tetra-tert.-butyldisiloxan,
1.3-Dichlor-1.1.3.3-tetrathexyldisiloxan,
1.3-Dichlor-1.1.3.3-tetra(1-phenylethyl)disiloxan und 1.3-Dichlor-1.3-dicyclohexyl-1.3-dimethyldisiloxan.

Die Disiloxane der allgemeinen Formel (I) können nicht nur in situ hergestellt, sondern auch als Reinsubstanz isoliert werden.

Die erfindungsgemäße Umsetzung kann dabei in Substanz, Lösung oder Emulsion durchgeführt werden.

Beispiele für die im erfindungsgemäßen Verfahren eingesetzten Silane der Formel (II) sind Dichlordi-iso-propylsilan, Dichlordi-iso-butylsilan, Dichlordi-tert.-butylsilan, Dichlordithexylsilan, Dichlordi(1-phenylethyl)silan, Dichlorcyclohexylmethylsilan, Dibromdi-iso-propylsilan und Diioddi-iso-propylsilan, wobei Dichlordi-iso-propylsilan, Dichlordi-iso-butylsilan, Dichlordi-tert.-butylsilan, Dichlordithexylsilan, Dichlordi(1-phenylethyl) silan, Dichlorcyclohexylmethylsilan und Dibromdi-iso-propylsilan bevorzugt und Dichlordi-iso-propylsilan, Dichlordi-isobutylsilan, Dichlordi-tert.-butylsilan, Dichlordithexylsilan, Dichlordi(1-phenylethyl)silan und Dichlorcyclohexylmethylsilan besonders bevorzugt sind.

Bei den nach dem erfindungsgemäßen Verfahren hergestellten Disiloxanen der allgemeinen Formel (I) handelt es sich ebenso wie bei den erfindungsgemäß eingesetzten Silanen der allgemeinen Formel (II) bevorzugt um bei Raumtemperatur und 1013 hPa flüssige oder feste Organosiliciumverbindungen.

Beispiele für die Verbindung (III) sind Wasser, Methanol, Ethanol, n-Propanol, iso-Propanol, n-Butanol, iso-Butanol, tert.-Butanol oder ein Alkohol mit 5 bis 30 Kohlenstoffatomen, wobei Wasser, Methanol, Ethanol und n-Propanol bevorzugt, Wasser, Methanol und Ethanol besonders bevorzugt sind, insbesondere Wasser.

Bei den im erfindungsgemäßen Verfahren eingesetzten Verbindungen der Formel (III) kann es sich jeweils um eine Art einer solchen Verbindung wie auch um ein Gemisch aus mindestens zwei Arten solcher Verbindungen handeln.

Das erfindungsgemäß eingesetzte Di(organyl)dihalogensilan der Formel (II) sowie die Verbindungen der Formel (III) mit R² ≠ H sind handelsübliche Produkte bzw. nach in der Chemie bekannten Methoden herstellbar.

So kann beispielsweise ein Di(organyl)dihalogensilan durch Umsetzung von i-PrMgBr mit SiCl₄, durch Reaktion von i-PrCl mit Si-Cu bei 350°C, durch Chlorierung von (i-Pr)₂SiHCl mit SO₂Cl₂ in Anwesenheit von ZnCl₂, durch Umsetzung von SiCl4 mit i-PrLi oder durch Umsetzung von i-PrCl, Si und Cu/Zn bei 300-400°C hergestellt werden.

Bei dem erfindungsgemäßen Verfahren werden Dihalogensilan der Formel (II) und Verbindung der Formel (III) im Molverhältnis von vorzugsweise 1000:1 bis 1:1000, besonders bevorzugt im Molverhältnis von 100:1 bis 1:100, insbesondere im Molverhältnis von 10:1 bis 1:10 miteinander umgesetzt.

Bei dem erfindungsgemäßen Verfahren können alle bekannten Verbindungen, die Chlorsilan-Hydrolyse-Reaktionen katalysieren, wie beispielsweise Alkalihydroxide, bzw. alle bekannten Verbindungen, die Alkoholyse-Hydrolyse-Reaktionen katalysieren, eingesetzt werden, wie beispielsweise Halogenide, Chalkogenide oder Pnictide der Alkali- oder Erdalkalimetale, wie z.B. Natriumchlorid, Halogenide, Chalkogenide oder Pnictide der Metalle der 3.-5. Hauptgruppe, wie z.B. Aluminium(III)-Chlorid, Zinn(II)- bzw. Zinn(IV)-chlorid, Blei(II)- bzw. Blei(IV)-chlorid und Bismuth(III)- bzw. Bismuth(V)-chlorid, Halogenide, Chalkogenide oder Pnictide der Übergangsmetalle, wie z.B. von Eisen, Ruthenium, Rhodium, Iridium, Nickel, Palladium oder Platin, was jedoch nicht bevorzugt ist.

Falls bei dem erfindungsgemäßen Verfahren Katalysatoren eingesetzt werden, handelt es sich bevorzugt um Lithium-, Natrium- und Kaliumhydroxid sowie um Halogenide der Nebengruppenmetalle, wobei Natrium- und Kaliumhydroxid sowie Eisen(III)-chlorid besonders bevorzugt sind.

Falls bei dem erfindungsgemäßen Verfahren Katalysatoren eingesetzt werden, handelt es sich um Mengen von vorzugsweise 0,001 bis 10 Gewichtsprozent, besonders bevorzugt um 0,01 bis 5 Gewichtsprozent, jeweils bezogen auf das Gesamtgewicht an reaktiven Komponenten, also Verbindungen der Formel (II) und (III).

Bei dem erfindungsgemäßen Verfahren können organische Lösungsmittel, die sich von den eingesetzten Verbindungen der Formel (III) unterscheiden und gegenüber den Reaktionsteilnehmern inert sind, mitverwendet werden, was bevorzugt ist.

Beispiele für gegebenenfalls eingesetzte organische Lösungsmittel sind Toluol, Xylol, Tetrahydrofuran, n-Butylacetat, Dimethoxyethan, Dioxan und Diethylether.

Falls im erfindungsgemäßen Verfahren organische Lösungsmittel eingesetzt werden, handelt es sich bevorzugt um Tetrahydrofuran, Dioxan oder Diethylether.

Falls im erfindungsgemäßen Verfahren organische Lösungsmittel eingesetzt werden, handelt es sich um Mengen von vorzugsweise 0,01 bis 1000 Gewichtsäquivalente, bevorzugt 0,02 bis 999 Gewichtsäquivalente, jeweils bezogen auf das Gesamtgewicht der Komponenten der Formeln (II) und (III).

Falls organische Lösungsmittel mitverwendet werden, so werden diese nach der erfindungsgemäßen Umsetzung vorzugsweise entfernt.

Das erfindungsgemäße Verfahren wird vorzugsweise beim Druck der umgebenden Atmosphäre, also zwischen 900 und 1100 hPa durchgeführt. Es kann aber auch bei höheren oder niedrigeren Drücken durchgeführt werden.

Ferner wird das erfindungsgemäße Verfahren vorzugsweise bei einer Temperatur von -30 bis 150°C, besonders bevorzugt 25 bis 120°C, insbesondere 25 bis 100°C, durchgeführt.

Nach Beendigung der erfindungsgemäßen Umsetzung kann das Disiloxan der allgemeinen Formel (I) nach üblichen, dem Fachmann bekannten Methoden, wie etwa wahlweise durch Destillation als Reinsubstanz aus der Reaktionsmischung oder, nach Zusatz eines geeigneten Solvens, als entsprechende Lösung destilliert werden.

Bei dem erfindungsgemäßen Verfahren kann nicht umgesetztes Dihalogensilan mit weiteren Anteilen von Verbindungen der Formel (III) zu 1.3-Dihalogen-1.1.3.3-tetra(organyl)disiloxan (I) umgesetzt werden.

Falls erwünscht kann nach Beendigung des erfindungsgemäßen Verfahrens der gegebenenfalls eingesetzte Katalysator unwirksam gemacht werden.

Das erfindungsgemäße Verfahren kann batchweise, halbkontinuierlich oder vollkontinuierlich durchgeführt werden.

Das erfindungsgemäßen Verfahren hat den Vorteil, daß es sehr einfach in der Durchführung ist und ein sehr hoher Umsatz erzielt wird.

Des weiteren hat das erfindungsgemäße Verfahren den Vorteil, daß durch Modifikation der Organylreste durch die Wahl des entsprechenden Dihalogendiorganylsilans die sterische Beanspruchung auf einfache Art und ganz gezielt eingestellt werden kann.

Ferner hat das erfindungsgemäße Verfahren den Vorteil, daß keine Übergangs- oder Schwermetalle verwendet werden müssen und die Temperaturbelastung gering ist. Falls jedoch übergangsmetall- bzw. schwermetallhaltige Katalysatoren eingesetzt werden, sind deren Chloride bevorzugt.

Ferner hat das erfindungsgemäße Verfahren den Vorteil, daß durch den sterischen Anspruch der Kohlenstoff-haltigen Substituenten R nur in äußerst geringem Umfang Polymerisation unter Bildung von Polysiloxanen eintritt.

Das erfindungsgemäß hergestellte 1.3-Dihalogen-1.1.3.3-tetra(organyl)disiloxan kann für alle Zwecke eingesetzt werden, für die auch bisher Disiloxane eingesetzt wurden, wie beispielsweise als Schutzgruppenreagenz in der organischen Synthese, als Schutzgruppenreagenz in der Nucleosid- bzw. Nucleotid-, in der Cyclaridinchemie und zur Modifikation von HPLC-Säulenmaterial.

In den nachfolgenden Beispielen beziehen sich alle Angaben von Teilen und Prozentsätzen, soweit nicht anders angegeben ist, auf das Gewicht. Sofern nicht anders angegeben, werden die nachfolgenden Beispiele bei einem Druck der umgebenden Atmosphäre, also etwa bei 1000 hPa, und bei Raumtemperatur, also bei etwa 20°C bzw. bei einer Temperatur, die sich beim Zusammengeben der Reaktanten bei Raumtemperatur ohne zusätzliche Heizung oder Kühlung einstellt, durchgeführt.

### Beispiel 1

Zu einer Lösung von 41,0 g (221,6 mmol) Dichlordi-iso-propylsilan in 40 ml Tetrahydrofuran wurde bei Raumtemperatur tropfenweise eine Mischung von 2,2 ml H₂O und 2,2 ml Dioxan gegeben. Nach 20,5 Stunden Erhitzen und Rückfluß ließ man auf Raumtemperatur abkühlen und erhielt 24,5 g (77,7 mmol) 1.3-Dichlor-1. 1.3.3-tetra-iso-propyldisiloxan durch fraktionierte Destillation rein in einer Ausbeute von 70 %.

### Beispiel 2

Zu einer Lösung von 41,0 g (221,6 mmol) Dichlordi-iso-propylsilan in 40 ml Diethylether wurde bei Raumtemperatur tropfenweise eine Mischung von 2,2 ml H₂O und 2,2 ml Dioxan gegeben. Nach 20,5 Stunden Erhitzen und Rückfluß ließ man auf Raumtemperatur abkühlen und erhielt 18,2 g (57,7 mmol) 1.3-Dichlor-1.1.3.3-tetra-iso-propyldisiloxan durch fraktionierte Destillation rein in einer Ausbeute von 52 %.

### Beispiel 3

Zu 41,0 g (221,6 mmol) Dichlordi-iso-propylsilan wurden über einen Zeitraum von 30 Minuten 306,0 g (6,7 mol) Ethanol gegeben. Nach einer Reaktionszeit von 30 Minuten wurden 10,0 g Eisen(III)-chlorid hinzugefügt und die Mischung langsam auf Rückflußtemperatur erhitzt. Über einen Zeitraum von 4 Stunden wurde entstehendes Ethylchlorid abdestilliert. Nach Filtration und fraktionierter Destillation wurden 23,8 g (75,4 mmol) 1.3-Dichlor-1.1.3.3-tetra-iso-propyldisiloxan rein in einer Ausbeute von 68 % erhalten.

### Beispiel 4

Zu einer Lösung von 47,2 g (221,6 mmol) Dichlordi-iso-butylsilan in 40 ml Tetrahydrofuran wurde bei Raumtemperatur tropfenweise eine Mischung von 2,2 ml H₂O und 2,2 ml Dioxan gegeben. Nach 20,5 Stunden Erhitzen und Rückfluß ließ man auf Raumtemperatur abkühlen und erhielt 28,0 g (75,4 mmol) 1.3-Dichlor-1.1.3.3-tetra-iso-butyldisiloxan durch fraktionierte Destillation rein in einer Ausbeute von 68 %.

### Beispiel 5

Zu einer Lösung von 47,2 g (221,6 mmol) Dichlordi-tert-butylsilan in 40 ml Tetrahydrofuran wurde bei Raumtemperatur tropfenweise eine Mischung von 2,2 ml H₂O und 2,2 ml Dioxan gegeben. Nach 20,5 Stunden Erhitzen und Rückfluß ließ man auf Raumtemperatur abkühlen und erhielt 28,0 g (75,4 mmol) 1.3-Dichlor-1.1.3.3-tetra-tert-butyldisiloxan durch fraktionierte Destillation rein in einer Ausbeute von 68 %.

### Beispiel 6

Zu einer Lösung von 59,7 g (221,6 mmol) Dichlordithexylsilan in 40 ml Tetrahydrofuran wurde bei Raumtemperatur tropfenweise eine Mischung von 2,2 ml H₂O und 2,2 ml Dioxan gegeben. Nach 20,5 Stunden Erhitzen und Rückfluß ließ man auf Raumtemperatur abkühlen und erhielt 34,8 g (72,0 mmol) 1.3-Dichlor-1.1.3.3-tetrathexyldisiloxan durch fraktionierte Destillation rein in einer Ausbeute von 65 %.

### Beispiel 7

Zu einer Lösung von 68,5 g (221,6 mmol) Dichlordi(1-phenylethyl)silan in 40 ml Tetrahydrofuran wurde bei Raumtemperatur tropfenweise eine Mischung von 2,2 ml H₂O und 2,2 ml Dioxan gegeben. Nach 20,5 Stunden Erhitzen und Rückfluß ließ man auf Raumtemperatur abkühlen und erhielt 40,0 g (70,9 mmol) 1.3-Dichlor-1.1.3.3-tetra(1-phenylethyl)disiloxan durch fraktionierte Destillation rein in einer Ausbeute von 64 %.

### Beispiel 8

Zu einer Lösung von 43,7 g (221,6 mmol) Dichlorcyclohexylmethylsilan in 40 ml Tetrahydrofuran wurde bei Raumtemperatur tropfenweise eine Mischung von 2,2 ml H₂O und 2,2 ml Dioxan gegeben. Nach 20,5 Stunden Erhitzen und Rückfluß ließ man auf Raumtemperatur abkühlen und erhielt 24,1 g (70,9 mmol) 1.3-Dichlor-1.3-dicyclohexyl-1.3-dimethyldisiloxan durch fraktionierte Destillation rein in einer Ausbeute von 64 %.

## Patentansprüche

1. Verfahren zur Herstellung von Disiloxanen der allgemeinen Formel
XRR¹Si-O-SiR¹RX (I),
dadurch gekennzeichnet, daß Silane der allgemeinen Formel
RR¹SiX₂ (II)
mit Verbindungen der Formel
HOR² (III)
umgesetzt werden,
wobei
R gleich oder verschieden sein kann und einen einwertigen, gegebenenfalls substituierten Kohlenwasserstoffrest mit 3 bis 30 Kohlenstoffatomen bedeutet, der über ein sekundäres bzw. tertiäres Kohlenstoffatom an das entsprechende Siliciumatom gebunden ist,
R¹ gleich oder verschieden sein kann und einen einwertigen, gegebenenfalls substituierten Kohlenwasserstoffrest mit 1 bis 30 Kohlenstoffatomen bedeutet,
X gleich oder verschieden sein kann und Halogenatom bedeutet und
R² ein Wasserstoffatom oder einen einwertigen, gegebenenfalls substituierten Kohlenwasserstoffrest mit 1 bis 18 Kohlenstoffatomen bedeutet.

2. Verfahren nach Anspruch 1, dadurch gekennzeichnet, daß es sich bei der Verbindung der Formel (III) um Wasser, Methanol oder Ethanol handelt.

3. Verfahren nach Anspruch 1 oder 2, dadurch gekennzeichnet, daß Dihalogensilan der Formel (II) und Verbindung der Formel (III) im Molverhältnis von 1000:1 bis 1:1000 miteinander umgesetzt werden.

4. Verfahren nach einem oder mehreren der Ansprüche 1 bis 3, dadurch gekennzeichnet, daß die Umsetzung bei einer Temperatur von -30 bis 150°C durchgeführt wird.

5. Verfahren nach einem oder mehreren der Ansprüche 1 bis 4, dadurch gekennzeichnet, daß X die Bedeutung von Chloratom hat.
